# EUROPÄISCHE PATENTANMELDUNG

(11) **EP 1 764 541 A1**
(43) Veröffentlichungstag der Anmeldung: **21.03.2007**
(21) Anmeldenummer: 06019693.8
(22) Anmeldetag: 20.09.2006
(51) Int. Cl.: F16L 53/00, H05B 3/58

(54) **Elektrische Heizvorrichtung, beheizbarer Schlauch und Herstellungsverfahren derselben**

(30) Priorität: 20.09.2005 DE 102005044846
(71) Anmelder: DBK David + Baader GmbH, 76870 Kandel/Pfalz (DE)
(72) Erfinder: Bauer, Hans-Peter, 76889 Klingenmünster (DE); Jäger, Rupert, 76744 Wörth / Büchelberg (DE)
(74) Vertreter: Grünecker, Kinkeldey, Stockmair & Schwanhäusser Anwaltssozietät

(57) **Zusammenfassung**

Die vorliegende Erfindung bezieht sich auf eine elektrische Heizvorrichtung zum Beheizen einer Leitung, vorzugsweise eines Schlauchs, in dem sich ein zu erwärmendes Medium befindet, wobei die elektrische Heizvorrichtung mindestens einen elektrischen Heizleiter (1) und mindestens zwei Stromversorgungsleitungen (2, 3), die mit einer Spannungsquelle verbindbar sind zum Anlegen einer elektrischen Spannung, umfasst. Die vorliegende Erfindung bezieht sich weiterhin auf einen beheizbaren Schlauch, der eine solche elektrische Heizvorrichtung aufnimmt, und auf ein Herstellungsverfahren derselben. Um eine gattungsgemäße elektrische Heizvorrichtung, einen diese elektrische Heizvorrichtung aufnehmenden beheizbaren Schlauch und ein Herstellungsverfahren derselben dahingehend zu verbessern, dass eine konstante Heizleistung pro Längeneinheit erreicht wird, ist der mindestens eine elektrische Heizleiter (1) alternierend mit einer der zwei Stromversorgungsleitungen (2, 3) elektrisch verbunden.

## Beschreibung

Die vorliegende Erfindung bezieht sich auf eine elektrische Heizvorrichtung zum Beheizen eines starren oder flexiblen Schlauchs, einen diese elektrische Heizvorrichtung umfassenden beheizbaren Schlauch und ein Herstellungsverfahren derselben. Eine derartige elektrische Heizvorrichtung weist mindestens einen elektrischen Heizleiter und mindestens zwei Stromversorgungsleitungen, die mit einer Spannungsquelle verbindbar sind, zum Anlegen einer elektrischen Spannung, auf.

Aus der EP 1 329 660 A2 ist ein flexibler mehrschichtiger beheizbarer Schlauch bekannt, der eine Verstärkungsschicht, eine elastomere Außenschicht sowie einen zur Erwärmung eines im Schlauch fließenden Mediums dienenden elektrischen Heizleiter aufweist. Der Heizleiter ist wendelförmig in die elastomere Außenschicht eingebettet. Für den Anschluss an eine Spannungsquelle werden die Enden des Heizleiters durch Herausziehen aus der elastomeren Außenschicht freigelegt, zu einer elektrischen Anschlussvorrichtung geführt und mit dieser verbunden. An die Anschlussvorrichtung kann dann eine Spannungsquelle angeschlossen werden.

Aus der EP 1 526 322 A1 ist eine Fluidleitung bekannt, wobei ein Rohr eine Hülle aus einem Gewebe aufweist, das seinerseits mindestens einen Heizleiter aufweist. Die Hülle umgibt das Rohr unmittelbar und der Heizleiter ist in der Hülle angeordnet. Alternativ kann der Heizleiter die Hülle bilden oder in der Außenseite des Rohres angeordnet sein.

Bei diesen herkömmlichen beheizbaren Schläuchen wird der Heizleiter mit einer definierten Steigung über eine bestimmte Länge eines Schlauchs um seinen Umfang umwickelt. Solche beheizbare Schläuche werden in sehr unterschiedlichen Applikationen angewandt, wie z.B. in einer Förderkette in einem Fahrzeug, die Reinigungsflüssigkeiten für die Windschutzscheibe befördert. Beheizbare Schläuche können auch in der Förderkette eines Systems zur Erwärmung von Harnstofflösung angewandt werden. Je nach Applikation werden sehr unterschiedliche Schlauchlängen benötigt.

Diese Vielfalt an Schlauchlängen macht aber eine Dimensionierung des Heizleiters notwenig, weil die Länge des Heizleiters, der üblicherweise in der Form eines Widerstandsdrahts vorgesehen ist, den Wert des Widerstands definiert. Wenn eine Schlauchlänge z.B. halbiert wird, wird die Länge des Heizleiters bei gleichbleibender Steigung auch halbiert. Durch Halbierung der Länge des Heizleiters ergibt sich auch eine Halbierung des internen Widerstands, vorausgesetzt, dass die Querschnittsfläche und Widerstandsfähigkeit des Widerstandsdrahts unverändert sind. Da die an dem beheizbaren Schlauch angelegte Spannung gleich bleibt, ergibt sich durch Halbierung der Länge des Heizleiters eine Verdoppelung der absoluten Leistung. Infolge dessen wird die Heizleistung pro Längeneinheit vervierfacht.

Die Vielfalt an benötigten Schlauchlängen erschwert daher eine flexible Serienfertigung, da der Heizleiter je nach Schlauchlänge, die in der jeweiligen Applikation angewandt wird, entsprechend dimensioniert werden muss.

Der Erfindung liegt daher die Aufgabe zugrunde, eine elektrische Heizvorrichtung, einen beheizbaren starren oder flexiblen Schlauch, der diese elektrische Heizvorrichtung aufnimmt, und ein Herstellungsverfahren der genannten Art dahingehend zu verbessern, dass eine konstante Heizleitung pro Längeneinheit erreicht wird.

Gemäß der vorliegenden Erfindung wird diese Aufgabe durch eine elektrische Heizvorrichtung mit den Merkmalen des Patentanspruchs 1 und einen beheizbaren Schlauch mit den Merkmalen des Patentanspruchs 15 gelöst. Weiterhin wird die Aufgabe durch ein entsprechendes Herstellungsverfahren mit den Schritten der Patentansprüche 25 und 33 gelöst.

Vorteilhafte Weiterbildungen der vorliegenden Erfindung sind Gegenstand mehrerer Unteransprüche.

Dadurch, dass der mindestens eine elektrische Heizleiter gemäß der vorliegenden Erfindung alternierend mit einer der zwei Stromversorgungsleitungen elektrisch verbunden ist, kann eine Parallelschaltung gebildet werden, wobei jeder Abschnitt einen gleichbleibenden Widerstand aufweist. Somit kann eine konstante Heizleistung pro Längeneinheit erricht werden, was ein Ablängen eines mit einer solchen elektrischen Heizvorrichtung versehenen beheizbaren Schlauchs in jedem gewünschten Maß ermöglicht. Beheizbare Schläuche mit unterschiedlichen Längen können daher benutzt werden, ohne eine Dimensionierung des elektrischen Heizleiters durchführen zu müssen.

Dadurch, dass der mindestens eine elektrische Heizleiter und die mindestens zwei Stromversorgungsleitungen gemäß der vorliegenden Erfindung im Wesentlichen parallel zueinander verlaufen, ist es möglich, die Herstellung der Heizvorrichtung zu vereinfachen und eine Fertigung in einem Endlosverfahren zu realisieren, was eine kostengünstige Fertigung ermöglicht.

Wenn man die Verbindung zwischen dem mindestens einen elektrischen Heizleiter und den zwei Stromversorgungsleitungen durch Löten, Schweißen, Crimpen oder Verdrillen herstellt, kann auf einfache Weise eine sichere Verbindung zwischen dem mindestens einen Heizleiter und den Stromversorgungsleitungen gewährleistet werden.

Besonders vorteilhaft ist es, den mindestens einen elektrischen Heizleiter zwischen den zwei Stromversorgungsleitungen anzuordnen, denn die Verbindung kann somit vereinfacht werden. Insbesondere, wenn der mindestens eine elektrische Heizleiter an den Stromversorgungsleitungen gelötet oder geschweißt ist, kann z.B. die Menge an Lötmitteln oder die Länge der Lötdrähte reduziert werden.

Wenn die zwei Stromversorgungsleitungen mit einer isolierenden Lackierung versehen sind, können der mindestens eine Heizleiter und die zwei Stromversorgungsleitungen mit einem relativ geringen Abstand zueinander im Wesentlichen parallel zueinander geführt werden, da eine elektrische Isolation zwischen dem Heizleiter und den Stromversorgungsleitungen garantiert ist, so dass eine kompakte elektrische Heizvorrichtung gebildet werden kann. Darüber hinaus können der Heizleiter und die zwei Stromversorgungsleitungen zur Stabilisierung der elektrischen Heizvorrichtung auch ohne Abstand zueinander zopfförmig entlang einer Längsachse der elektrischen Heizvorrichtung geführt werden.

Alternativ können der mindestens eine elektrische Heizleiter und die zwei Stromversorgungsleitungen, die keine isolierende Lackierung aufweisen, in eine flexible isolierende Folie einlaminiert werden. Somit wird eine flexible elektrische Heizvorrichtung gebildet, die dann auf einfache Weise um einen Schlauch umwickelt werden kann.

Vorzugsweise ist der Heizleiter in Form eines Widerstandsdrahts vorgesehen, aber vorteilhaft ist es auch, wenn der Heizleiter aus Metall oder aus Karbonfaser besteht.

Sieht man im Wesentlichen konstante Abstände zwischen dem Verbindungspunkt des mindestens einen elektrischen Heizleiters mit einer der Stromversorgungsleitungen und dem Verbindungspunkt des mindestens einen elektrischen Heizleiters mit der anderen der Stromversorgungsleitungen vor, wird eine konstante Heizleistung pro Längeneinheit erreicht. Somit kann ein Anwender einen mit der elektrischen Heizvorrichtung versehenen beheizbaren Schlauch an einer beliebigen Stelle abschneiden, um ihn in einer beliebigen Applikation anzuwenden.

Darüber hinaus, wenn der mindestens eine elektrische Heizleiter und eine der zwei Stromversorgungsleitungen durch einen weiteren Verbindungspunkt miteinander verbunden sind, wobei ein Abstand zwischen dem Verbindungspunkt des mindestens einen elektrischen Heizleiters mit einer der Stromversorgungsleitungen und dem weiteren Verbindungspunkt des mindestens einen elektrischen Heizleiters mit der einen der Stromversorgungsleitungen klein gegenüber dem Abstand zwischen dem Verbindungspunkt des mindestens einen elektrischen Heizleiters mit einer der Stromversorgungsleitungen und dem Verbindungspunkt des mindestens einen elektrischen Heizleiters mit der anderen der Stromversorgungsleitungen ist, kann gewährleistet werden, dass zumindest eine Verbindung zwischen dem mindestens einen elektrischen Heizleiter und einer der Stromversorgungsleitungen übrig bleibt, wenn die andere defekt ist. Somit wird eine größere Lebensdauer des mit der erfindungsgemäßen elektrischen Heizvorrichtung versehenen beheizbaren Schlauchs erreicht. Weiterhin kann zwischen den Verbindungspunkten eine Ablängung der elektrischen Heizvorrichtung vorgenommen werden. Hierdurch bleibt der angrenzende Abschnitt funktionsfähig.

Gemäß einer bevorzugten Ausführungsform der Erfindung sind der erste Verbindungspunkt und der weitere Verbindungspunkt durch Wickeln einer Schlaufe des elektrischen Heizleiters gebildet. Dies bietet den Vorteil, dass keine störenden zusätzlichen Verbindungselemente, wie beispielsweise Drähte, Klammern oder Schweißpunkte, aus dem Querschnitt der elektrischen Heizvorrichtung herausragen. Dadurch wird die Weiterverarbeitung, insbesondere das Aufwickeln der elektrischen Heizvorrichtung auf Spulen, vereinfacht. Ferner wird die spätere Verarbeitung beim Extrudieren des Schlauchs stark vereinfacht.

In einer weiteren Ausgestaltung können mehr als zwei Stromversorgungsleitungen verwendet werden, zwischen denen ein elektrischer Heizleiter alternierend elektrisch verbunden ist. Durch diese Ausgestaltung ist es möglich, die Heizvorrichtung durch Anlegen der Stromversorgungsleitungen an entsprechende Spannungsquellen in unterschiedlichen Leistungsstufen zu betreiben.

Wenn man die erfindungsgemäße elektrische Heizvorrichtung um einen Umfang eines Schlauchs umwickelt, der ein rohrförmiges Profil umfasst, durch welches ein flüssiges oder gasförmiges zu erwärmendes Medium strömt, kann auf einfache Weise ein beheizbarer Schlauch gebildet werden. Besonders vorteilhaft ist es, wenn die elektrische Heizvorrichtung um den Umfang des Schlauchs in einem Endlosverfahren umwickelt wird. Somit wird ein beheizbarer Schlauch auf sehr kostengünstige Weise gefertigt.

Versieht man den beheizbaren Schlauch mit einer Ummantelung aus isolierendem Material, so kann ein beheizbarer Schlauch gebildet werden, der die mindestens zwei Stromversorgungsleitungen und den mindestens einen elektrischen Heizleiter elektrisch isoliert und vor Chemikalien schützt.

Eine solche isolierende Ummantelung kann beispielsweise eine Lackierung sein. Alternativ kann die Ummantelung durch einen Schrumpfschlauch erfolgen. Dabei wird zunächst der innere Schlauch im Endlosverfahren mit der elektrischen Heizvorrichtung umwickelt. Nach dem Ablängen auf das gewünschte Maß kann dieses Stück in einen Schrumpfschlauch eingeführt werden. Mittels Zuführen von thermischer Energie verringert sich der Durchmesser des Schrumpfschlauchs und wird somit mechanisch auf dem Inneren befestigt. Weiterhin ist die Bildung der isolierenden Ummantelung mittels der Aufbringung einer weiteren extrudierten und vulkanisierten Außenschicht möglich.

Wenn die erfindungsgemäße elektrische Heizvorrichtung in einem Endlosverfahren spiralförmig um einen Umfang des beheizbaren Schlauchs umwickelt und das isolierende Material auch in einem Endlosverfahren auf den mit der erfindungsgemäßen elektrischen Heizvorrichtung versehenen beheizbaren Schlauch appliziert werden, wird der erfindungsgemäße beheizbare Schlauch auf kostengünstige Weise hergestellt.

Schneidet man den mit dem isolierenden Material versehenen beheizbaren Schlauch an einer beliebigen Stelle, kann somit ein beheizbarer Schlauch hergestellt werden, der eine beliebige Länge aufweist. Diese beliebige Länge kann der Anwender willkürlich bestimmen, je nachdem was die gezielte Applikation ist. Danach kann ein Stecker an das abgeschnittene Ende angeschlossen werden, um den beheizbaren Schlauch in z.B. eine Förderkette einzuführen. Dieser Stecker kann z.B. als fliegender Stecker oder als kombinierter Steckverbinder ausgebildet sein. In einer besonderen Ausgestaltung ist der Steckverbinder drehbar ausgelegt.

Dadurch, dass der erfindungsgemäße beheizbare Schlauch sowohl ein gasförmiges als auch ein flüssiges zu erwärmendes Medium aufnehmen kann, können unterschiedliche Medien mit unterschiedlichen Wärmekapazitäten je nach Applikation mit dem erfindungsgemäßen beheizbaren Schlauch erwärmt werden. Ebenso ist ein Auftauen eines gefrorenen Mediums im beheizbaren Schlauch möglich.

Anhand der in den beiliegenden Zeichnungen dargestellten Ausgestaltungen wird die Erfindung im Folgenden näher erläutert. Ähnliche oder korrespondierende Einzelheiten der erfindungsgemäßen elektrischen Heizvorrichtung und des erfindungsgemäßen beheizbaren Schlauchs sind in den Figuren mit denselben Bezugszeichen versehen. Es zeigen:
- **Fig. 1**: eine schematische Darstellung einer bevorzugten Ausführungsform der erfindungsgemäßen elektrischen Heizvorrichtung;
- **Fig. 2**: eine schematische Darstellung einer weiteren Ausführungsform der erfindungsgemäßen elektrischen Heizvorrichtung;
- **Fig. 3**: eine schematische Darstellung der Herstellung der in der Figur 1 gezeigten elektrischen Heizvorrichtung;
- **Fig. 4**: eine schematische Darstellung der Herstellung einer bevorzugten Ausführungsform des erfindungsgemäßen beheizbaren Schlauchs;
- **Fig. 5**: eine weitere schematische Darstellung der Herstellung des in der Figur 4 gezeigten beheizbaren Schlauchs;
- **Fig. 6**: eine schematische Darstellung einer weiteren Ausführungsform des erfindungsgemäßen beheizbaren Schlauchs;
- **Fig. 7**: eine schematische Darstellung einer weiteren Ausführungsform des erfindungsgemäßen beheizbaren Schlauchs;
- **Fig. 8a**: eine schematische Darstellung des ersten Schritts des Verfahrens zum Bilden zweier Verbindungspunkte zwischen einer Stromversorgungsleitung und dem elektrischen Heizleiter;
- **Fig. 8b**: eine schematische Darstellung eines weiteren Schritts des Verfahrens zum Bilden zweier Verbindungspunkte zwischen einer Stromversorgungsleitung und dem elektrischen Heizleiter;
- **Fig. 8c**: eine schematische Darstellung des Endzustands am Ende des Verfahrens zum Bilden zweier Verbindungspunkte zwischen einer Stromversorgungsleitung und dem elektrischen Heizleiter.

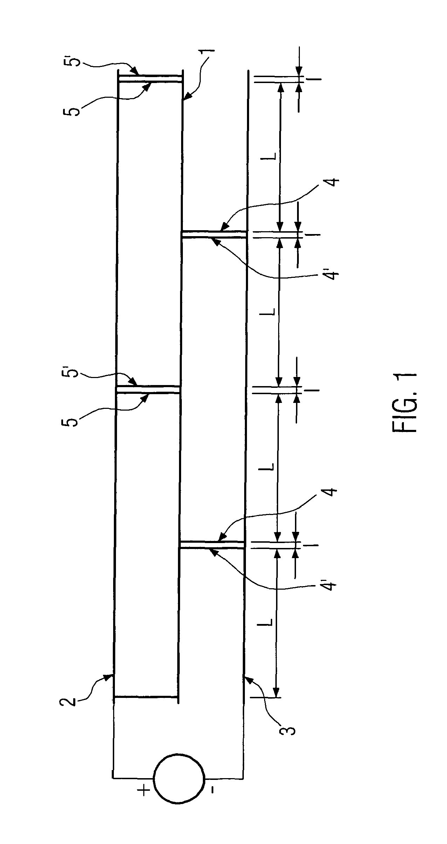

Wie aus der Fig. 1 ersichtlich, weist die erfindungsgemäße elektrische Heizvorrichtung einen elektrischen Heizleiter 1, der vorzugsweise zwischen zwei Stromversorgungsleitungen 2, 3 angeordnet ist, auf. Der elektrische Heizleiter 1 besteht vorzugsweise aus einem Widerstandsdraht, dessen Durchmesser typischerweise 0,01 mm bis 0,5 mm beträgt. Die zwei Stromversorgungsleitungen 2, 3 bestehen vorzugsweise aus zwei Drähten aus leitfähigem Material, vorzugsweise Kupfer, wobei ihr Durchmesser typischerweise 0,2 mm bis 0,8 mm beträgt. Die Festigkeit des elektrischen Heizleiters 1 ist groß gegenüber der Festigkeit der zwei Stromversorgungsleitungen 2, 3.

Die zwei Stromversorgungsleitungen 2, 3 sind in einer bevorzugten Ausführungsform der vorliegenden Erfindung mit einem isolierenden Material versehen, vorzugsweise Lackierung. Somit können die zwei Stromversorgungsleitungen 2, 3 und der elektrische Heizleiter 1 mit kleinem Abstand zueinander zusammengeführt werden, während eine elektrische Isolation gewährleistet ist. Alternativ können auch die zwei Stromversorgungsleitungen 2, 3 und der elektrische Heizleiter 1 zusammen in eine flexible isolierende Folie einlaminiert werden, so dass das Versehen der Versorgungsleitungen 2, 3 mit isolierendem Material nicht mehr notwendig ist. Darüber hinaus ist diese flexible Folie, die die Stromversorgungsleitungen 2, 3 und den elektrischen Heizleiter 1 aufweist, auf einfache Weise um einen Schlauch umwickelbar.

Die zwei Stromversorgungsleitungen 2, 3 können mit den Anschlussklemmen einer Spannungsquelle verbunden werden. Wie aus der Figur 1 ersichtlich, ist die Stromversorgungsleitung 2 mit der Anschlussklemme + einer Spannungsquelle verbunden und die Stromversorgungsleitung 3 mit der Anschlussklemme - der Spannungsquelle verbunden. Die Spannungsquelle führt den Stromversorgungsleitungen 2, 3 einen elektrischen Strom zu, der dann durch Verbindungen 4, 5 zwischen den Stromversorgungsleitungen 2, 3 und dem elektrischen Heizleiter 1 fließt. Somit kann Strom durch den elektrischen Heizleiter 1 fließen und sich der Heizleiter 1 erwärmen.

Wie aus der Fig. 1 auch ersichtlich, ist der elektrische Heizleiter 1 alternierend mit einer der zwei Stromversorgungsleitungen 2, 3 elektrisch verbunden. Der elektrische Heizleiter 1 ist mit einer der zwei Stromversorgungsleitungen 2, 3 vorzugsweise durch Löten, Schweißen, Crimpen oder Verdrillen verbunden. Der elektrische Heizleiter 1 und die jeweiligen Stromversorgungsleitungen 2, 3 können einfach oder zweifach miteinander verbunden sein. Die Fig. 1 zeigt eine bevorzugte Ausführungsform der vorliegenden Erfindung, wobei die Verbindung des elektrischen Heizleiters 1 mit einer der zwei Stromversorgungsleitungen 2, 3 durch zwei Verbindungspunkte 4, 4', 5, 5' realisiert ist.

Wenn die zwei Stromversorgungsleitungen 2, 3 mit isolierendem Material versehen sind, werden die Isolierungen der Stromversorgungsleitungen 2, 3 eingeschnitten, so dass das isolierende Material an einer Stelle entlang der jeweiligen Stromversorgungsleitung 2, 3 entfernt wird. Danach wird der elektrische Heizleiter 1 vorzugsweise durch Löten oder Schweißen mit der abisolierten Stelle der jeweiligen Stromversorgungsleitung 2, 3 elektrisch verbunden. Die Verbindung 4, 5 des elektrischen Heizleiters 1 mit einer der zwei Stromversorgungsleitungen 2, 3 kann in Form einer Löt- bzw. Schweißstelle oder Löt- bzw. Schweißdrahts ausgeführt werden. Ebenso ist ein Vercrimpen bzw. Verdrillen zur elektrischen Kontaktierung möglich.

Der elektrische Heizleiter 1 ist durch zwei Verbindungspunkte 4, 4' mit der Stromversorgungsleitung 3 verbunden, wobei die zwei Verbindungspunkte 4, 4' mit einer Distanz I voneinander beabstandet sind. Der elektrische Heizleiter 1 ist dann nach einem Abstand L entlang der Längsachse der elektrischen Heizvorrichtung durch zwei Verbindungspunkte 5, 5' mit der Stromversorgungsleitung 2 verbunden. Die zwei Verbindungspunkte 5, 5' sind mit einer gleichbleibenden Distanz I voneinander beabstandet. Nach einem gleichbleibenden Abstand L entlang der Längsachse der elektrischen Heizvorrichtung, ist der elektrische Heizleiter 1 durch zwei Verbindungspunkte 4, 4' mit der Stromversorgungsleitung 3 verbunden. Somit folgen die Verbindungspunkte 4, 5 des elektrischen Heizleiters 1 mit einer der Stromversorgungsleitungen 2, 3 einem alternierenden Muster. Der Abstand L zwischen zwei alternierenden Verbindungspunkten 4, 5 entlang der Längsachse der elektrischen Heizvorrichtung bleibt im Wesentlichen konstant. Der Abstand L beträgt vorzugsweise 100 mm bis 800 mm.

Wenn der elektrische Heizleiter 1 und eine der zwei Stromversorgungsleitungen 2, 3 zweifach miteinander verbunden sind, ist der Abstand I zwischen zwei Verbindungspunkten 4, 4', 5, 5' auf einer der zwei Stromversorgungsleitungen 2, 3 klein gegenüber dem Abstand L zwischen zwei Verbindungspunkten 4, 5 des elektrischen Heizleiters 1 mit zwei unterschiedlichen Stromversorgungsleitungen 2, 3.

Obwohl eine zweifache Verbindung des elektrischen Heizleiters 1 mit einer der zwei Stromversorgungsleitungen 2, 3 als eine bevorzugte Ausführungsform der vorliegenden Erfindung dargestellt wird, ist eine einfache Verbindung des elektrischen Heizleiters 1 mit den Stromversorgungsleitungen 2, 3 auch möglich.

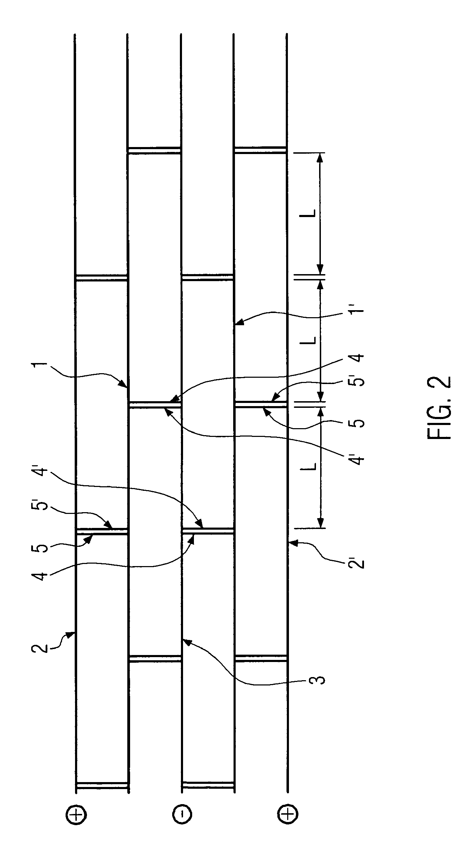

Die Figur 2 zeigt eine weitere Ausführungsform der erfindungsgemäßen elektrischen Heizvorrichtung, wobei mehr als zwei Stromversorgungsleitungen und mehr als ein elektrischer Heizleiter verwendet werden.

Ein erster elektrischer Heizleiter 1 ist gemäß der in der Figur 1 gezeigten Ausgestaltung zwischen zwei Stromversorgungsleitungen 2, 3 angeordnet. Somit wird ein erster Heizkreis gebildet. Ein zweiter elektrischer Heizleiter 1' ist zwischen der Stromversorgungsleitung 3 und einer weiteren Stromversorgungsleitung 2' angeordnet. Somit wird ein zweiter Heizkreis gebildet.

Wie in der in der Figur 1 gezeigten Ausgestaltung, ist der erste Heizleiter 1 durch Verbindungspunkte 4, 4', 5, 5' mit den Stromversorgungsleitungen 2, 3 elektrisch verbunden. Der erste elektrische Heizleiter 1 ist durch eine zweifache Verbindung 5, 5' mit der Stromversorgungsleitung 2 verbunden. Darüber hinaus ist der erste elektrische Heizleiter 1 durch die zweifache Verbindung 4, 4' mit der Stromversorgungsleitung 3 elektrisch verbunden. Der zweite elektrische Heizleiter 1' ist durch die zweifache Verbindung 4, 4' mit der Stromversorgungsleitung 3 und durch die zweifache Verbindung 5, 5' mit der Stromversorgungsleitung 2' verbunden.

Die Stromversorgungsleitung 2 ist mit der Anschlussklemme + einer Spannungsquelle verbindbar und die Stromversorgungsleitung 3 ist mit der Anschlussklemme - der Spannungsquelle verbunden. Die Stromversorgungsleitung 2' ist mit der Anschlussklemme + einer weiteren Spannungsquelle verbunden. Durch Anlegen der Stromversorgungsleitungen 2, 2', 3 an entsprechende Spannungsquellen können die zwei in der Figur 2 gezeigten Heizkreise in unterschiedlichen Leistungsstufen betrieben werden.

Obwohl die Figur 2 nur zwei Heizkreise zeigt, ist es auch möglich, gemäß der vorliegenden Erfindung, weitere Heizkreise zu bilden, indem weitere Stromversorgungsleitungen verwendet werden, zwischen denen ein weiterer elektrischer Heizleiter alternierend mit den Stromversorgungsleitungen elektrisch verbunden ist.

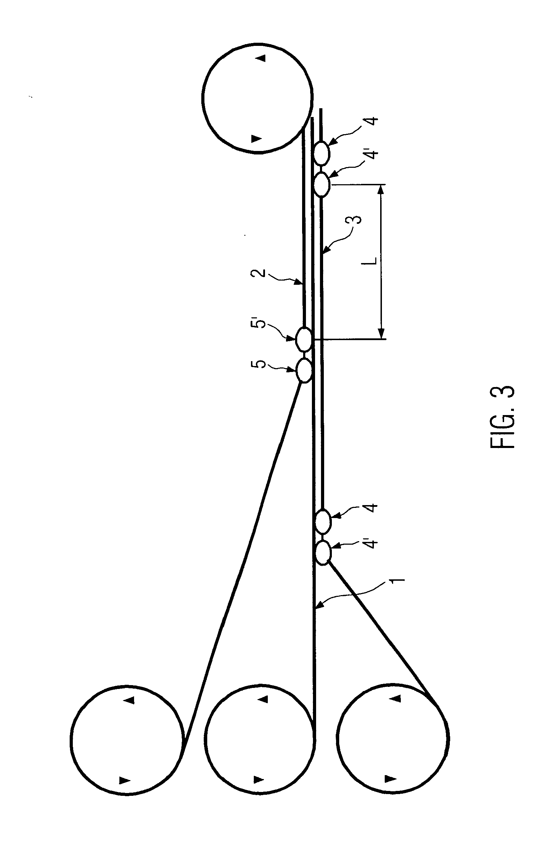

Die Fig. 3 zeigt eine schematische Darstellung des Herstellungsverfahrens einer bevorzugten Ausführungsform der erfindungsgemäßen elektrischen Heizvorrichtung. Der elektrische Heizleiter 1 und die Stromversorgungsleitungen 2, 3 sind auf Spulen gewickelt, so dass eine Herstellung der elektrischen Heizvorrichtung gemäß eines Endlosverfahrens möglich ist. Der elektrische Heizleiter 1 und die zwei Stromversorgungsleitungen 2, 3 werden parallel zueinander geführt, und der elektrische Heizleiter 1 wird alternierend mit einer der zwei Stromversorgungsleitungen 2, 3 elektrisch verbunden.

Der elektrische Heizleiter 1 wird entweder einfach oder zweifach an einer der zwei Stromversorgungsleitungen 2, 3 gemäß dem oben genannten alternierenden Muster gelötet, geschweißt, gecrimpt oder verdrillt. Durch das Endlos-Herstellungsverfahren kann die elektrische Heizvorrichtung in Form einer endlosen Rolle hergestellt werden.

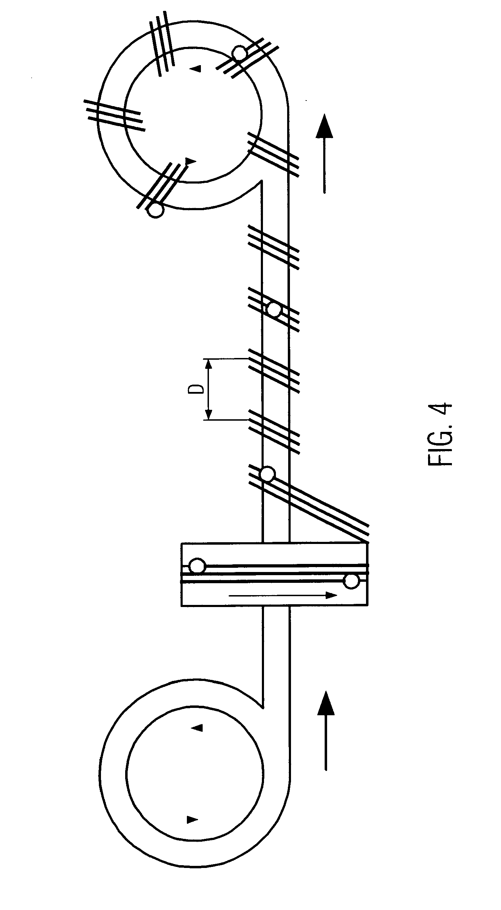

Aus der Fig. 4 ist eine schematische Darstellung des Herstellungsverfahrens einer bevorzugten Ausführungsform des ertndungsgemäßen beheizbaren Schlauchs gezeigt. Die erfindungsgemäße elektrische Heizvorrichtung wird um einen flexiblen isolierenden Schlauch gewickelt. Vorzugsweise wird die elektrische Heizvorrichtung gemäß eines Endlosverfahrens um den Umfang des beheizbaren Schlauchs gewickelt, so dass der beheizbare Schlauch in einer endlosen Rolle hergestellt werden kann.

Die erfindungsgemäße elektrische Heizvorrichtung wird mit einer Steigung D um den Umfang des beheizbaren Schlauchs umwickelt, wobei die Steigung D vorzugsweise 2 mm bis 30 mm beträgt. Die ausgewählte Steigung entlang der Längsachse des beheizbaren Schlauchs bestimmt die erzielte Heizleistung pro Längeneinheit.

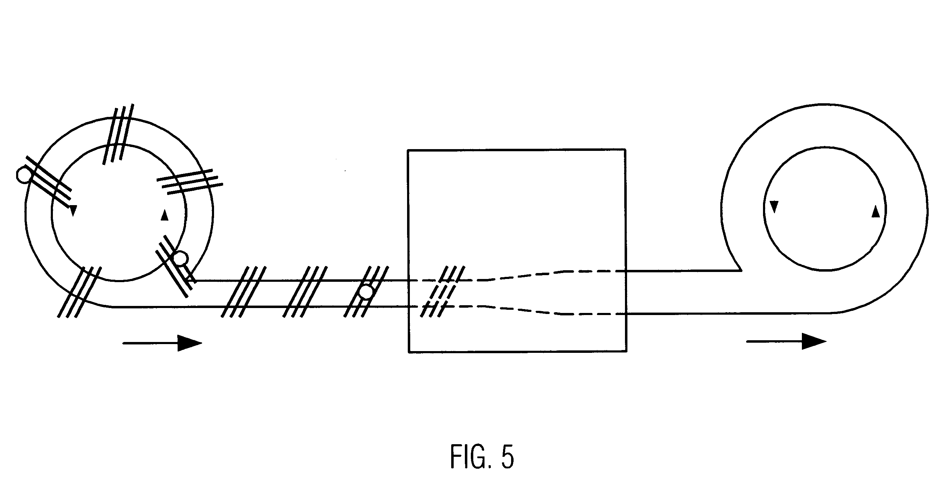

Die Fig. 5 zeigt einen weiteren Schritt des Herstellungsverfahrens des erfindungsgemäßen beheizbaren Schlauchs. Der mit der erfindungsgemäßen elektrischen Heizvorrichtung versehene beheizbare Schlauch wird in z.B. ein Tauchbecken bzw. eine Lackierstation eingeführt, damit isolierendes Material, vorzugsweise Lackierung, auf den beheizbaren Schlauch appliziert wird. Somit ist die um den Umfang des beheizbaren Schlauchs umwickelte elektrische Heizvorrichtung elektrisch isoliert und auch vor Chemikalien geschützt. Alternativ kann die isolierende Ummantelung durch einen Schrumpfschlauch erfolgen. Dabei wird zunächst der innere Schlauch im Endlosverfahren mit der elektrischen Heizvorrichtung umwickelt. Das Versehen des beheizbaren Schlauchs mit einem isolierenden Material wird vorzugsweise gemäß eines Endlosverfahrens ausgeführt, so dass der erfindungsgemäße beheizbare Schlauch in Form einer endlosen Rolle hergestellt wird.

Nach dem Applizieren des isolierenden Materials auf dem beheizbaren Schlauch kann der beheizbare Schlauch an einer beliebigen Stelle abgeschnitten werden, und somit eine beliebige Schlauchlänge je nach Applikationsbedürfnissen ausgewählt werden. Nach dem Ablängen auf das gewünschte Maß kann das abgeschnittene Stück in einen Schrumpfschlauch eingeführt werden. Mittels Zuführen von thermischer Energie verringert sich der Durchmesser des Schrumpfschlauchs und wird somit mechanisch auf dem Inneren befestigt. Weiterhin ist die Bildung der isolierenden Ummantelung mittels der Aufbringung einer weiteren extrudierten und vulkanisierten Außenschicht möglich.

Ein Anschlussstecker kann dann an dem abgeschnittenen Ende angeschlossen werden. Dieser Anschlussstecker ermöglicht es, den beheizbaren Schlauch in z.B. eine Förderkette von gasförmigen oder flüssigen Medien einzuführen.

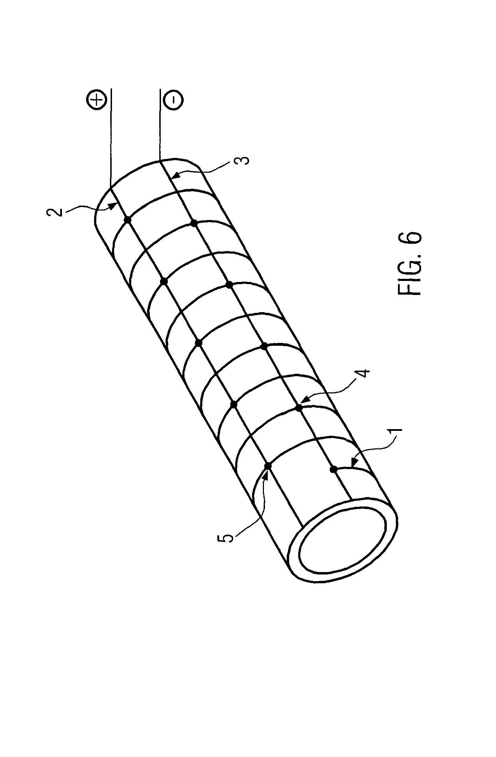

Die Figur 6 zeigt eine schematische Darstellung einer weiteren Ausführungsform des beheizbaren Schlauchs gemäß der vorliegenden Erfindung. Die Stromversorgungsleitungen 2, 3 werden direkt auf einen Schlauch aufgebracht, wobei die Stromversorgungsleitungen 2, 3 entlang einer Längsachse des Schlauchs aufgebracht werden. Der elektrische Heizleiter 1 wird dann um einen Umfang des beheizbaren Schlauchs gewickelt und alternierend mit einer der zwei Stromversorgungsleitungen 2, 3 elektrisch verbunden.

Der elektrische Heizleiter 1 ist zunächst mit der Stromversorgungsleitung 3 an einem Verbindungspunkt 4 elektrisch verbunden und nach einer Umdrehung um den Umfang des Schlauchs mit der Stromversorgungsleitung 2 an einem Verbindungspunkt 5 elektrisch verbunden. Der elektrische Heizleiter 1 ist dann nach einer weiteren Umdrehung um den Umfang des Schlauchs mit der Stromversorgungsleitung 3 an einen weiteren Verbindungspunkt 4 elektrisch verbunden. Der elektrische Heizleiter 1 ist gemäß dieses alternierenden Musters entlang der Längsachse des beheizbaren Schlauchs alternierend mit den zwei Stromversorgungsleitungen 2, 3 elektrisch verbunden.

Darüber hinaus bleibt ein Abstand L zwischen dem Verbindungspunkt 4 des elektrischen Heizleiters 1 mit einer der Stromversorgungsleitungen 3 und dem Verbindungspunkt 5 des elektrischen Heizleiters 1 mit der anderen der Stromversorgungsleitungen 2 entlang des elektrischen Heizleiters 1 im Wesentlichen konstant.

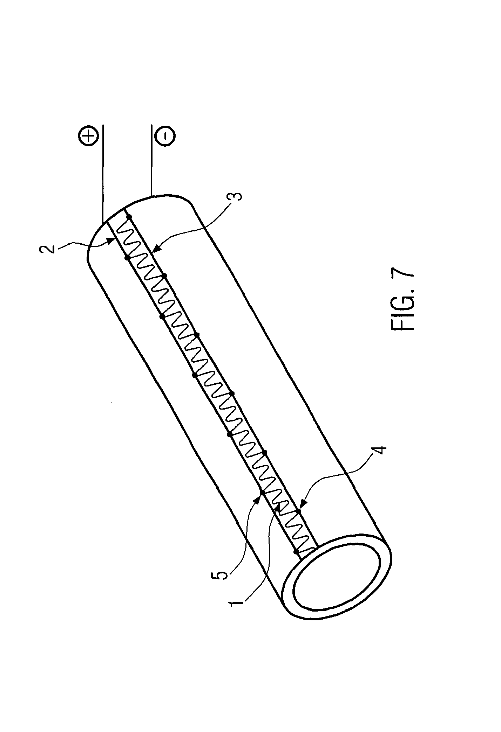

Die Figur 7 zeigt eine schematische Darstellung einer weiteren Ausführungsform des erfindungsgemäßen beheizbaren Schlauchs. Wie in der in der Figur 6 gezeigten Ausführungsform des beheizbaren Schlauchs werden die zwei Stromversorgungsleitungen 2, 3 entlang einer Längsachse des beheizbaren Schlauchs aufgebracht. Der elektrische Heizleiter 1 wird dann mäanderförmig zwischen den zwei Stromversorgungsleitungen 2, 3 auf dem Schlauch aufgebracht.

Der elektrische Heizleiter 1 ist zunächst mit der Stromversorgungsleitung 2 an einem Verbindungspunkt 5 und dann mit der Stromversorgungsleitung 3 an einem Verbindungspunkt 4 elektrisch verbunden. Danach wird der elektrische Heizleiter 1 mit der Stromversorgungsleitung 3 an einem Verbindungspunkt 4 verbunden. Der elektrische Heizleiter 1 ist gemäß dieses alternierenden Musters entlang einer Längsachse des beheizbaren Schlauchs mit den Stromversorgungsleitungen 2, 3 elektrisch verbunden.

Darüber hinaus bleibt ein Abstand L zwischen dem Verbindungspunkt 4 des elektrischen Heizleiters 1 mit einer der Stromversorgungsleitungen 3 und dem Verbindungspunkt 5 des elektrischen Heizleiters 1 mit der anderen der zwei Stromversorgungsleitungen 2 entlang des elektrischen Heizleiters 1 im Wesentlichen konstant.

Gemäß der vorliegenden Erfindung ist es auch möglich, die in den Figuren 6 und 7 gezeigten Ausführungsformen des erfindungsgemäßen beheizbaren Schlauchs zu kombinieren.

In einer bevorzugten Ausführungsform des erfindungsgemäßen beheizbaren Schlauchs weist der beheizbare Schlauch eine Länge von maximal 3 m bei einer Anwendung in z.B. der Förderkette von Flüssigkeiten in einem Kraftfahrzeug. Der Abstand L zwischen zwei alternierenden Verbindungspunkten weist einen Wert von 650 mm auf und die elektrische Heizvorrichtung wird mit einer Steigung D von 15 mm auf den Schlauch gewickelt.

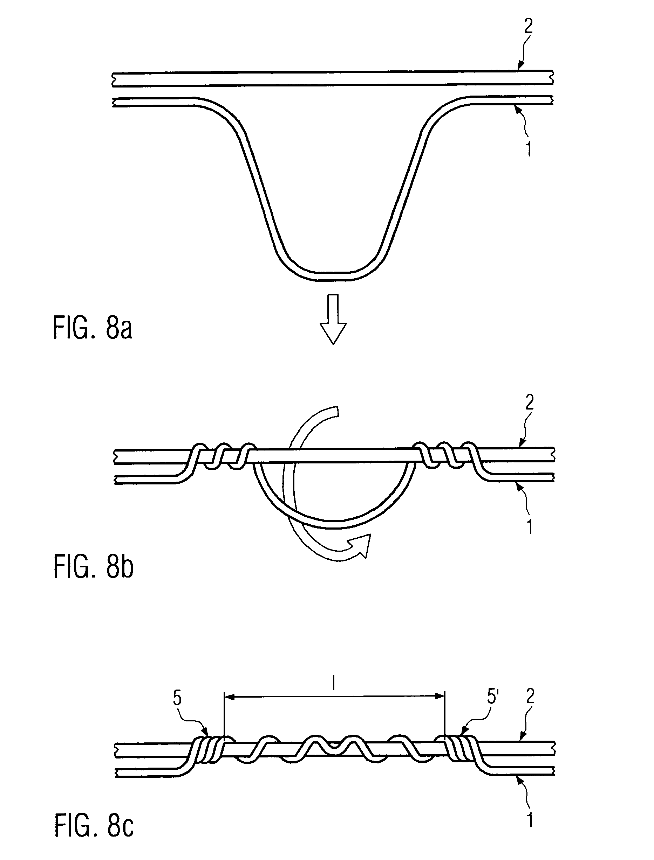

In Bezug auf Figuren 8a, 8b und 8c wird das Verfahren zum Bilden zweier Verbindungspunkte zwischen einer Stromversorgungsleitung 2, 3 und dem elektrischen Heizleiter 1 erläutert.

Die Figur 8a zeigt den ersten Schritt des Verfahrens, in dem eine Schlaufe des elektrischen Heizleiters 1 ausgezogen wird. In der Figur 8a ist die Stromversorgungsleitung 2 dargestellt, aber die Erläuterungen im Folgenden gelten selbstverständlich auch für die Stromversorgungsleitung 3. Die Figur 8b zeigt einen weiteren Schritt des Verfahrens, wobei die Schlaufe um die Stromversorgungsleitung 2 umwickelt wird, bis ein Endzustand erreicht wird, der in Figur 8c gezeigt ist. Somit werden zwei Verbindungspunkte 5, 5' gebildet, die nah aneinander liegen. Die Distanz I zwischen dem Verbindungspunkt 5 und dem weiteren Verbindungspunkt 5' hat einen Wert, der wesentlich kleiner als der Wert des Abstandes L zwischen zwei aufeinander folgenden Verbindungspunkten 4, 4', 5, 5' zu zwei unterschiedlichen Stromversorgungsleitungen 2, 3 ist.

## Patentansprüche

1. Elektrische Heizvorrichtung zum Beheizen eines starren oder flexiblen Schlauchs, in dem sich ein zu erwärmendes Medium befindet, vorzugsweise darin strömt, wobei die elektrische Heizvorrichtung umfasst:
mindestens einen elektrischen Heizleiter (1),
mindestens zwei Stromversorgungsleitungen (2, 3) die mit einer Spannungsquelle verbindbar sind zum Anlegen einer elektrischen Spannung,
wobei der mindestens eine elektrische Heizleiter (1) alternierend mit einer der mindestens zwei Stromversorgungsleitungen (2, 3) elektrisch verbunden ist.

2. Elektrische Heizvorrichtung nach Anspruch 1, wobei die Mittenachse des mindestens einen elektrischen Heizleiters (1) und die Mittenachse zumindest einer der zwei Stromversorgungsleitungen (2, 3) oder die Mittenachsen der zwei Stromversorgungsleitungen (2, 3) im Wesentlichen abschnittsweise parallel zu einander verlaufen.

3. Elektrische Heizvorrichtung nach einem der Ansprüche 1 oder 2, wobei die Verbindung zwischen dem mindestens einen elektrischen Heizleiter (1) und den zwei Stromversorgungsleitungen (2, 3) durch Löten, Schweißen, Crimpen oder Verdrillen hergestellt ist.

4. Elektrische Heizvorrichtung nach einem der Ansprüche 1 bis 3, wobei der mindestens eine elektrische Heizleiter (1) zwischen den zwei Stromversorgungsleitungen (2, 3) angeordnet ist.

5. Elektrische Heizvorrichtung nach einem der Ansprüche 1 bis 4, wobei der mindestens eine elektrische Heizleiter (1) einen elektrischen Widerstandsdraht umfasst, dessen Durchmesser typischerweise 0,01 mm bis 0,5 mm beträgt.

6. Elektrische Heizvorrichtung nach einem der Ansprüche 1 bis 5, wobei die zwei Stromversorgungsleitungen (2, 3) zwei Drähte aus leitfähigem Material, vorzugsweise Kupfer, umfassen, deren Durchmesser typischerweise 0,1 mm bis 0,8 mm beträgt.

7. Elektrische Heizvorrichtung nach einem der Ansprüche 1 bis 6, wobei die zwei Stromversorgungsleitungen (2, 3) mit einer isolierenden Ummantelung, vorzugsweise Lackierung, versehen sind.

8. Elektrische Heizvorrichtung nach einem der Ansprüche 1 bis 6, wobei der mindestens eine elektrische Heizleiter (1) und die zwei Stromversorgungsleitungen (2, 3) in einer flexiblen isolierenden Folie einlaminiert sind.

9. Elektrische Heizvorrichtung nach einem der Ansprüche 1 bis 8, wobei eine Festigkeit des mindestens einen elektrischen Heizleiters (1) gegenüber einer Festigkeit der zwei Stromversorgungsleitungen (2, 3) groß ist.

10. Elektrische Heizvorrichtung nach einem der Ansprüche 1 bis 9, wobei die Abstände (L) zwischen dem Verbindungspunkt (4) des mindestens einen elektrischen Heizleiters (1) mit einer der Stromversorgungsleitungen (3) und dem Verbindungspunkt (5) des mindestens einen elektrischen Heizleiters (1) mit der anderen der Stromversorgungsleitungen (2) entlang der elektrischen Heizvorrichtung im Wesentlichen konstant sind.

11. Elektrische Heizvorrichtung nach Anspruch 10, wobei der mindestens eine elektrische Heizleiter (1) und eine der zwei Stromversorgungsleitungen (2, 3) durch einen weiteren Verbindungspunkt (4', 5') miteinander verbunden sind, wobei ein Abstand (I) zwischen dem Verbindungspunkt (4) des mindestens einen elektrischen Heizleiters (1) mit einer der Stromversorgungsleitungen (3) und dem weiteren Verbindungspunkt (4') des mindestens einen elektrischen Heizleiters (1) mit der einen der Stromversorgungsleitungen (3) klein gegenüber dem Abstand (L) zwischen dem Verbindungspunkt (4) des mindestens einen elektrischen Heizleiters (1) mit einer der Stromversorgungsleitungen (3) und dem Verbindungspunkt (5) des mindestens einen elektrischen Heizleiters (1) mit der anderen der Stromversorgungsleitungen (2) ist.

12. Elektrische Heizvorrichtung nach Anspruch 11, wobei der erste Verbindungspunkt (4, 5) und der weitere Verbindungspunkt (4', 5') durch Wickeln einer Schlaufe des elektrischen Heizleiters (1) gebildet sind.

13. Elektrische Heizvorrichtung nach einem der Ansprüche 1 bis 12, wobei die mindestens zwei Stromversorgungsleitungen (2, 3) mit einer Niederspannung, vorzugsweise in einem Kraftfahrzeug, verbindbar sind.

14. Beheizbarer starrer oder flexibler Schlauch umfassend ein rohrförmiges Profil, in welchem sich ein festes, flüssiges oder gasförmiges zu erwärmendes Medium befindet, vorzugsweise strömt, und eine elektrische Heizvorrichtung nach Anspruch 1.

15. Beheizbarer Schlauch nach Anspruch 14, wobei die Mittenachse des mindestens einen elektrischen Heizleiters (1) und die Mittenachse zumindest einer der zwei Stromversorgungsleitungen (2, 3) oder die Mittenachsen der zwei Stromversorgungsleitungen (2, 3) im Wesentlichen abschnittsweise parallel zu einander verlaufen.

16. Beheizbarer Schlauch nach einem der Ansprüche 14 oder 15, wobei die elektrische Heizvorrichtung um einen Umfang des beheizbaren Schlauchs gewickelt ist.

17. Beheizbarer Schlauch nach einem der Ansprüche 14 bis 16, wobei die elektrische Heizvorrichtung um einen Umfang des beheizbaren Schlauchs spiralförmig mit einer Steigung D gewickelt ist, die vorzugsweise 5 mm bis 30 mm beträgt.

18. Beheizbarer Schlauch nach Anspruch 14, wobei die zwei Stromversorgungsleitungen (2, 3) längs auf dem beheizbaren Schlauch aufgebracht sind und der mindestens eine elektrische Heizleiter (1) um einen Umfang des beheizbaren Schlauchs gewickelt ist.

19. Beheizbarer Schlauch nach Anspruch 14, wobei die zwei Stromversorgungsleitungen (2, 3) längs auf dem beheizbaren Schlauch aufgebracht sind und der mindestens eine elektrische Heizleiter (1) mäanderförmig zwischen den zwei Stromversorgungsleitungen (2, 3) aufgebracht ist.

20. Beheizbarer Schlauch nach einem der Ansprüche 14 bis 19, wobei der beheizbare Schlauch aus einem flexiblen isolierenden Material besteht.

21. Beheizbarer Schlauch nach einem der Ansprüche 14 bis 20, wobei der beheizbare Schlauch mit einem isolierenden Material, vorzugsweise Lackierung oder einem Schrumpfschlauch, versehen oder extrudiert und vulkanisiert ist.

22. Beheizbarer Schlauch nach einem der Ansprüche 14 bis 21, wobei die zwei Stromversorgungsleitungen (2, 3) mit einem Stecker verbindbar sind.

23. Verfahren zum Herstellen einer elektrischen Heizvorrichtung zum Beheizen eines starren oder flexiblen Schlauchs, wobei das Verfahren das Verbinden von mindestens einem elektrischen Heizleiter (1) alternierend mit einer von zwei Stromversorgungsleitungen (2, 3) aufweist.

24. Verfahren zum Herstellen eines beheizbaren starren oder flexiblen Schlauchs, umfassend das Anbringen einer nach Anspruch 23 hergestellten elektrischen Heizvorrichtung an einem Schlauch.
